# EUROPÄISCHE PATENTSCHRIFT

(11) **EP 2 997 286 B1**
(45) Veröffentlichungstag und Bekanntmachung des Hinweises auf die Patenterteilung: **20.11.2019**
(21) Anmeldenummer: 14727726.3
(22) Anmeldetag: 13.05.2014
(51) Int. Cl.: F16H 25/22

(54) **KUGELGEWINDETRIEB**
BALL SCREW
VIS D'ENTRAÎNEMENT À BILLES

(30) Priorität: 15.05.2013 DE 102013008311
(43) Veröffentlichungstag der Anmeldung: 23.03.2016
(73) Patentinhaber: SFS Intec Holding AG, 9435 Heerbrugg (CH)
(72) Erfinder: KUSTER, Hanspeter, 9436 Balgach (CH); HUSISTEIN, Kurt, 5736 Burg (CH); SCHÖNENBERGER, Markus, 9533 Kirchberg (CH); RENHARD, Patrick, 6811 Göfis (AT); RUPPER, Ivo, 9444 Diepoldsau (CH); LICHTENSTEIGER, Markus, 9462 Montlingen (CH); HUTTER, Pascal, 9444 Diepoldsau (CH)
(86) Internationale Anmeldenummer: PCT/EP2014/059683
(87) Internationale Veröffentlichungsnummer: WO 2014/184154

(56) Entgegenhaltungen:
- DE-A1- 4 229 583
- DE-A1- 19 749 137
- DE-A1-102005 007 875
- US-A1- 2012 304 793
- US-A1- 2013 068 052

## Beschreibung

Die Erfindung betrifft einen Kugelgewindetrieb mit einer Gewindespindel, einer Mutter, einer Mehrzahl von Wälzkörpern und mindestens einer Umlenkeinrichtung.

Derartige Kugelgewindetriebe dienen dazu, eine Rotationsbewegung in eine Längsbewegung zu transformieren, oder umgekehrt. Der Kugelgewindetrieb arbeitet dabei reibungsarm, verschleißarm, potentiell mit hohen Geschwindigkeiten sowie hoher Positioniergenauigkeit. Ebenfalls lassen sich große Kräfte über herkömmliche Kugelgewindetriebe übertragen, wie sie beispielsweise im Kraftfahrzeugbereich bei Bremsen, Kupplungen oder Lenkungen auftreten.

Da die Kugeln, oder allgemein, die Wälzkörper des Gewindetriebes bei dessen Betätigung ständig im Gewinde abrollen, ist es erforderlich, diese zurückzuführen. Zu diesem Zweck enthält ein Kugelgewindetrieb eine Umlenkeinrichtung, welche auf einer Seite Kugeln aufnimmt, diese durch einen Kanal zu einer anderen Stelle des Gewindes transportiert und dort wieder freigibt.

Aus der EP 2 221 506 B1 ist ein Kugelgewindetrieb bekannt, bei dem die Umlenkeinrichtung zweiteilig ausgebildet und mit Rasteinrichtungen ausgestattet ist. Aus der DE 10 2005 007 875 A1 ist ein Kugelgewindetrieb bekannt, bei dem die Umlenkeinrichtung ein radial innen liegendes erstes Körperteil und ein radial außen liegendes zweites Körperteil umfasst, die zusammen einen Umlenkkanal für die Wälzkörper bilden und mit Rasteinrichtungen ausgestattet ist.

Aufgabe der Erfindung ist es, einen Kugelgewindetrieb zur Verfügung zu stellen, der in der Herstellung kostengünstig ist, gleichwohl aber eine hohe Verschleißfestigkeit hat.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung betrifft einen Kugelgewindetrieb mit einer Gewindespindel, einer Mutter, einer Mehrzahl von Wälzkörpern und mindestens einer Umlenkeinrichtung, wobei die Gewindespindel durch Rotation relativ zu der Mutter in axialer Richtung relativ zu der Mutter verschiebbar ist und wobei die Umlenkeinrichtung ein radial innen liegendes erstes Körperteil und ein radial außen liegendes zweites Körperteil umfasst, die zusammen einen Umlenkkanal für die Wälzkörper bilden, wobei der Umlenkkanal zwei im Wesentlichen rohrförmige Enden als Wälzkörperöffnungen aufweist, die über einen Transferbereich miteinander verbunden sind, wobei das erste Köperteil in dem Transferbereich eine radial innen liegende Begrenzung des Umlenkkanals zur Verfügung stellt, wobei das zweite Körperteil in dem Transferbereich eine radial außen liegende Begrenzung sowie seitliche Begrenzungen des Umlenkkanals zur Verfügung stellt, wobei die rohrförmigen Enden des Umlenkkanals jeweils durch sich ergänzende teilrohrförmige Abschnitte des ersten Körperteils und des zweiten Körperteils gebildet sind, und wobei eine die Mutter umfassende Hülse vorgesehen ist, die Umlenkeinrichtung in einer Öffnung der Mutter sitzt, die Umlenkeinrichtung bei Abwesenheit der Hülse in einem entspannten Zustand radial über die äußere Mantelfläche der Mutter hinausragt und in Anwesenheit der Hülse diese eine radial nach innen gerichtete Kraft auf die Umlenkeinrichtung ausübt.

Bei der vorstehenden Definition des erfindungsgemäßen Kugelgewindetriebes ist angegeben, dass der Umlenkkanal zwei "im Wesentlichen" rohrförmige Enden als Wälzkörperöffnungen ausweist. Die Worte "im Wesentlichen" werden verwendet, um zum Ausdruck zu bringen, dass hier keine strenge Rohrförmigkeit in dem Sinne gefordert ist, dass entlang des Umfangs des Rohres ein durchgehender ununterbrochener Mantel vorliegen müsste. Vielmehr ist alleine aufgrund der Zweiteiligkeit kein durchgehender Rohrmantel zu erwarten. Ferner können zusätzlich zu der genannten Zweiteiligkeit der rohrförmigen Enden bewusst Lücken im Rohrumfang vorgesehen sein, um so eine Passung der Körperteile aufeinander zu erleichtern. Dadurch, dass die beiden Körperteile bevorzugt über ihre gesamte Länge aneinander anliegen, ist eine sichere Ausrichtung der Körperteile während des Betriebs gewährleistet, so dass irgendwelche Rasteinrichtungen entbehrlich sind. Dies macht den Zusammenbau des erfindungsgemäßen Kugelgewindetriebes einfach, ebenso eine eventuell erforderliche Wartung oder Reparatur im Bereich der Umlenkeinrichtung. Die Umlenkeinrichtung wird durch die Hülse bewegungsfrei in die Mutter gepresst, so dass im Betrieb des Kugelgewindetriebes keine Verschiebungen der Komponenten gegeneinander zu erwarten sind. Das hat den Vorteil, dass die Wälzkörper stets eine genau definierte Bahn beschreiben. Diese genaue Bahn der Wälzkörper durch den Umlenkkanal ist beispielsweise auch erreichbar, wenn man, wie im Stand der Technik, die Körperteile der Umlenkeinrichtung mit Rasteinrichtungen versieht. Diese sind jedoch bei der vorliegend definierten Ausführungsform nicht erforderlich, sondern sie wären sogar hinderlich, da die Hülse die Umlenkeinrichtung in der Mutter in ihre Optimalposition relativ zur Mutter presst, wobei auch die beiden Körperteile der Umlenkeinrichtung relativ zueinander ihre Optimalposition einnehmen.

Nützlicherweise kann vorgesehen sein, dass die teilrohrförmigen Abschnitte des ersten Körperteils und des zweiten Körperteils wenigstens an einem Ende des Umlenkkanals halbrohrförmig sind. Hierdurch ist bei beiden Körperteilen in ihren Endbereichen eine ausreichende Materialmenge vorhanden, um eine ausreichende Festigkeit im Aufnahmebereich für die Wälzkörper zur Verfügung zu stellen.

Ebenfalls kann vorgesehen sein, dass beide Körperteile wenigstens an einem Ende des Umlenkkanals dieselbe radiale Länge haben.

Gemäß einer bevorzugten Ausführungsform ist der Kugelgewindetrieb so ausgestaltet, dass das zweite Körperteil in dem Transferbereich eine u-förmige Begrenzung des Umlenkkanals zur Verfügung stellt. Eine u-förmige Begrenzung des Umlenkkanals ist insofern nützlich, als die Wälzkörper dann im gesamten Bereich der Begrenzung linienförmig an der Begrenzung abrollen können, solange die Radien der Wälzkörper und die Radien der Begrenzung in geeigneter Weise aufeinander abgestimmt sind. Ebenfalls sind aber auch andere Begrenzungen denkbar, beispielsweise einen im Querschnitt eckige, insbesondere rechteckige Begrenzung oder dergleichen.

Im Hinblick auf eine kostensparende Fertigung des Kugelgewindetriebes ist vorgesehen, dass das erste Körperteil ein Tiefzieh-, Stanz- oder Prägeteil ist.

Daher ist der Kugelgewindetrieb auch nützlicherweise in der Art weitergebildet, dass das zweite Körperteil ein Stanz- oder Prägeteil ist.

Besonders vorteilhaft ist, dass die radiale Kraft der Hülse auf die Umlenkeinrichtung mindestens in einem Temperaturbereich zwischen -50 und +150 Grad Celsius das zweite Körperteil auf das erste Körperteil drückt.

Gemäß einer weiteren bevorzugten Ausführungsform des erfindungsgemäßen Kugelgewindetriebes ist vorgesehen, dass mehrere miteinander verbundene Umlenkeinrichtungen vorgesehen sind, wobei die jeweils ersten Körperteile und/oder die jeweils zweiten Körperteile miteinander verbunden sind. Durch die Verwendung mehrerer Umlenkeinrichtungen kann die einzelne Umlenkeinrichtung kleiner gebaut werden, da sie nur weniger Gewindegänge der Mutter überbrücken muss. Hierdurch kann der Umlenkwinkel der Wälzkörper beim Eintritt in die Umlenkeinrichtung geringer gewählt werden, was Verschleiß und Geräuschentwicklung verringert.

Die Erfindung wird nun mit Bezug auf die begleitenden Zeichnungen anhand bevorzugter Ausführungsformen beispielhaft erläutert.

Es zeigen:
- Figur 1: eine perspektivische Darstellung eines Kugelgewindetriebes, teilweise in Explosionsansicht;
- Figur 2: eine perspektivische teilweise geschnittene Ansicht eines Kugelgewindetriebes;
- Figur 3: eine perspektivische Darstellung einer Umlenkeinrichtung;
- Figur 4: einen Schnitt durch eine erste Ausführungsform einer Umlenkeinrichtung;
- Figur 5: einen Schnitt durch eine zweite Ausführungsform einer Umlenkeinrichtung;
- Figur 6: eine teilweise geschnittene Seitenansicht einer Umlenkeinrichtung;
- Figur 7: eine perspektivische Darstellung von zwei miteinander verbundenen Umlenkeinrichtungen;
- Figur 8: eine teilweise geschnittene Seitenansicht von zwei miteinander verbundenen Umlenkeinrichtungen; und
- Figur 9: eine teilweise geschnittene perspektivische Ansicht von zwei miteinander verbundenen Umlenkeinrichtungen.

Bei der nachfolgenden Beschreibung der Zeichnungen bezeichnen gleiche Bezugszeichen gleiche oder vergleichbare Komponenten.

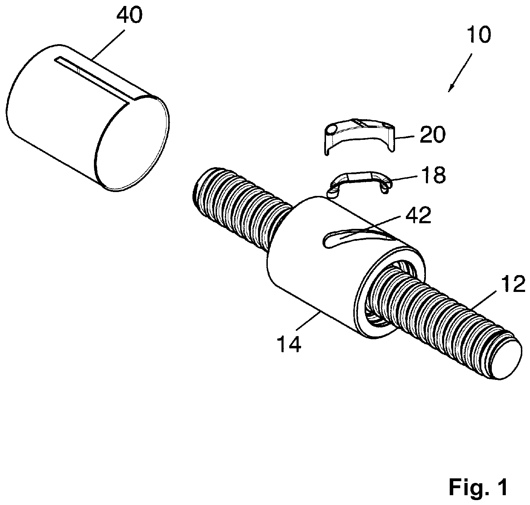

Figur 1 zeigt eine perspektivische Darstellung eines Kugelgewindetriebes 10, teilweise in Explosionsansicht. Der Kugelgewindetrieb 10 umfasst eine Gewindespindel 12 mit einem Außengewinde und einer Mutter 14 mit einem Innengewinde. Die Gewinde wirken über in Figur 1 nicht sichtbare Wälzkörper zusammen, so dass bei reibungsarmer Rotation der Gewindespindel 12 relativ zur Mutter 14 die Rotationsbewegung in eine Translationsbewegung der Mutter 14 relativ zur Gewindespindel 12 transformiert wird. Da bei der Relativbewegung von Gewindespindel 12 und Mutter 14 ständig ein Abrollen der Wälzkörper in den Gewinden stattfindet, müssen die Wälzkörper zurückgeführt werden. Zu diesem Zweck ist in der Mutter 14 eine Öffnung 42 vorgesehen, die beispielsweise als Ausfräsung realisiert ist. In diese Öffnung 42 kann eine aus einem ersten Körperteil 18 und einem zweiten Körperteil 20 bestehende Umlenkeinrichtung eingesetzt werden, die die Wälzkörper bei der Relativbewegung von einem Gewindegang der Mutter 14 zu einem anderen Gewindegang transportiert. Sind die Körperteile 18, 20 der Umlenkeinrichtung in die Öffnung 42 der Mutter 14 eingesetzt so wird eine Hülse 40 über die Mutter geschoben, so dass die Umlenkeinrichtung dann unverlierbar ist.

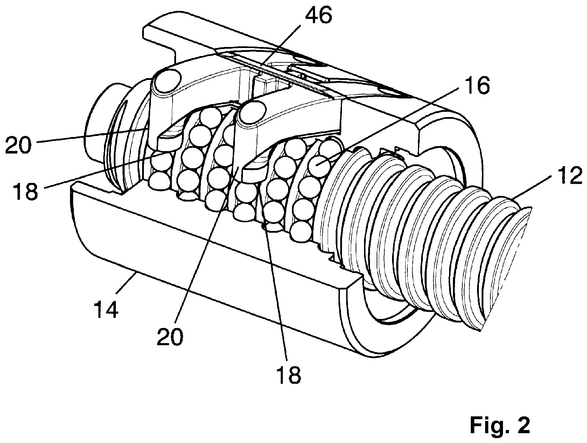

Figur 2 zeigt eine perspektivische teilweise geschnittene Ansicht eines Kugelgewindetriebes 10. Hier sind zusätzlich die als Kugeln ausgelegten Wälzkörper 16 zu erkennen. Bei der vorliegenden Ausführungsform sind zwei Umlenkeinrichtungen 18, 20 vorgesehen, die miteinander verbunden sind. Dreht die Gewindespindel 12 im Uhrzeigersinn gegen die Mutter 14, so werden die Kugeln von den Umlenkeinrichtungen 18, 20 an den hier sichtbaren Enden aufgenommen und dann schräg über mehrere Gewindegänge zurückgeführt, um an den anderen Enden der Umlenkeinrichtungen 18, 20 wieder entlassen zu werden. Bei entgegengesetzter Rotation der Gewindespindel 12 gegen die Mutter 14, vertauschen die Enden der Umlenkeinrichtungen ihre diesbezüglichen Rollen. Da die Umlenkkörper 18, 20 und/oder der Steg 46, der die Umlenkkörper 18, 20 miteinander verbindet, geringfügig über den Umfang der Mutter 14 hinausragen, wird durch aufschieben der in Figur 1 gezeigten Hülse 40 ein Druck auf die Umlenkkörper 18, 20 in radiale Richtung ausgeübt, der dazu führt, dass die Umlenkkörper fest und sicher positioniert sind, und dies über einen großen Temperaturbereich von vorzugsweise -50 bis +150 Grad Celsius. Kugelgewindetriebe können aus verschiedenen Materialien gefertigt sein, beispielsweise Metall, Kunststoff oder Keramik. Ebenfalls können Materialmischungen verwendet werden.

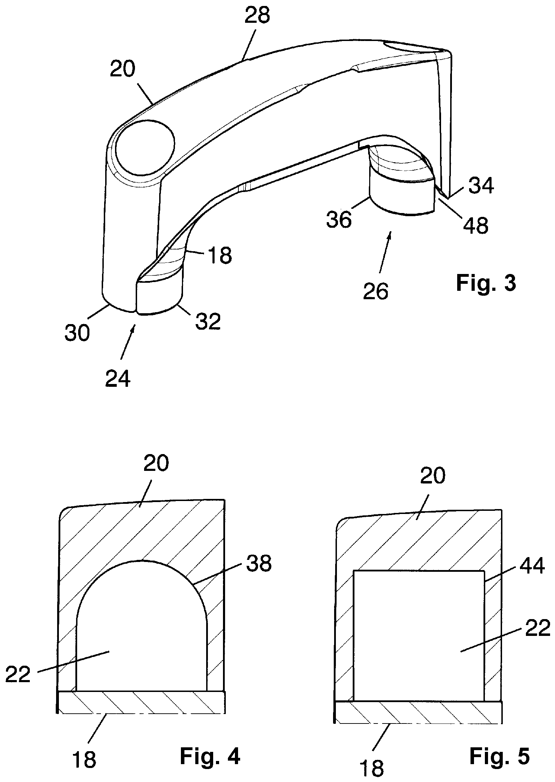

Figur 3 zeigt eine perspektivische Darstellung einer Umlenkeinrichtung 18, 20. Die Umlenkeinrichtung 18, 20 hat zwei rohrförmige Enden 24, 26. Zwischen den rohrförmigen Enden 24, 26 ist ein Transferbereich 28 vorgesehen. Das Ende 24 wird durch zwei teilrohrförmige Abschnitte 30, 32 gebildet, wobei einer der teilrohrförmigen Abschnitte 32 dem ersten Körperteil 18 angehört, während der andere teilrohrförmige Abschnitt 30 Komponente des zweiten Körperteils 20 ist. Ebenso wird das zweite Ende 26 aus dem teilrohrförmigen Abschnitt 36 des ersten Körperteils 18 und dem teilrohrförmigen Abschnitt 34 des zweiten Körperteils 20 gebildet. Alle oder einige der teilrohrförmigen Abschnitte können beispielsweise halbrohrförmig sein. Insgesamt ist wesentlich, dass die Enden der Umlenkeinrichtung eine im Wesentlichen rohrförmige Kontur beschreiben, wobei natürlich unstetige Übergänge zwischen den Körperteilen 18, 20 beziehungsweise sogar gewollte Lücken 48 zwischen den Körperteilen 18, 20 vorliegen können. Derartige Lücken können dazu dienen, insbesondere durch das Einpressen der Umlenkeinrichtung 18, 20 in die Mutter erzeugte Spannungen im Endbereich der Umlenkeinrichtung 18, 20 frei ausgleichen zu können.

Figur 4 zeigt einen Schnitt durch eine erste Ausführungsform einer Umlenkeinrichtung 18, 20. Figur 5 zeigt einen Schnitt durch eine zweite Ausführungsform einer Umlenkeinrichtung 18, 20. Dies sind zwei Beispiele der Begrenzungen der Umlenkkanäle 22, die durch das radial außenliegende zweite Körperteil 20 zur Verfügung gestellt werden. Die Umlenckanäle 22 werden durch Begrenzungen der Körperteile 18, 20 der Umlenkeinrichtungen gebildet. Im Beispiel gemäß Figur 4 ist die Begrenzung 38 u-förmig, während die Begrenzung 44 im Beispiel der Figur 5 rechteckig ist. Mischformen der gezeigten Begrenzungskonturen sind denkbar oder auch jegliche andere Arten der Begrenzung. In den Figuren 4 und 5 ist erkennbar, dass der untere Körperteil 18 jeweils eine radial innenliegende Begrenzung zur Verfügung stellt, während der obere Körperteil 20 jeweils eine radial außenliegende Begrenzung sowie seitliche Begrenzungen liefert.

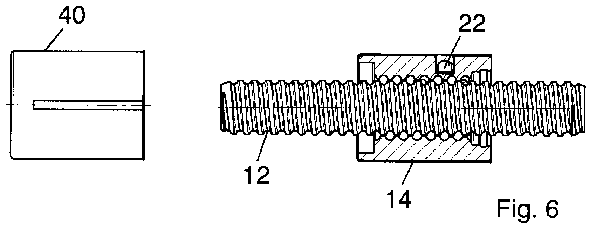

Figur 6 zeigt eine teilweise geschnittene Seitenansicht einer Umlenkeinrichtung 18, 20. Hier ist nochmals die Lage des Umlenkkanals 22 relativ zu der Mutter 14 und der Gewindespindel 12 erkennbar.

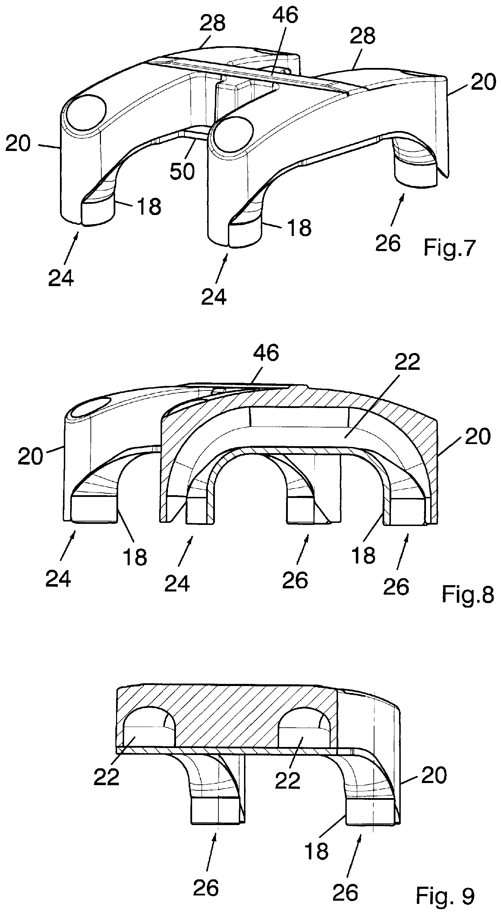

Figur 7 zeigt eine perspektivische Darstellung von zwei miteinander verbundenen Umlenkeinrichtungen 18, 20. Figur 8 zeigt eine teilweise geschnittene Seitenansicht von zwei miteinander verbundenen Umlenkeinrichtungen 18, 20. Figur 9 zeigt eine teilweise geschnittene perspektivische Ansicht von zwei miteinander verbundenen Umlenkeinrichtungen 18, 20. Hier sind wiederum Vorrichtungen dargestellt, die zwei Umlenkeinrichtungen 18, 20 mit jeweiligen Enden 24, 26 und Transferbereichen 28 aufweisen. Die Umlenkeinrichtungen 18, 20 sind über Stege 46, 50 miteinander verbunden, wobei ein radial außenliegender Steg 46 die radial außenliegenden Körperteile 20 miteinander verbindet und ein radial innenliegender Steg 50 die radial innenliegenden Körperteile 18 der jeweiligen Umlenkeinrichtungen 18, 20 koppelt. In Figur 8 ist ein Umlenkkanal 22 im Längsschnitt zu erkennen. In Figur 9 sind zwei Umlenkkanäle 22 im schrägen Querschnitt dargestellt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Kugelgewindetrieb
- 12: Gewindespindel
- 14: Mutter
- 16: Wälzkörper
- 18: Umlenkeinrichtung, erstes Körperteil
- 20: Umlenkeinrichtung, zweites Körperteil
- 22: Umlenkkanal
- 24: rohrförmiges Ende
- 26: rohrförmiges Ende
- 28: Transferbereich
- 30: teilrohrförmiger Abschnitt
- 32: teilrohrförmiger Abschnitt
- 34: teilrohrförmiger Abschnitt
- 36: teilrohrförmiger Abschnitt
- 38: u-förmige Begrenzung
- 40: Hülse
- 42: Öffnung
- 44: eckige Begrenzung
- 46: Steg
- 48: Lücke
- 50: Steg

## Patentansprüche

1. Kugelgewindetrieb (10) mit einer Gewindespindel (12), einer Mutter (14), einer Mehrzahl von Wälzkörpern (16) und mindestens einer Umlenkeinrichtung (18, 20), wobei die Gewindespindel (12) durch Rotation relativ zu der Mutter (14) in axialer Richtung relativ zu der Mutter (14) verschiebbar ist und wobei die Umlenkeinrichtung ein radial innen liegendes erstes Körperteil (18) und ein radial außen liegendes zweites Körperteil (20) umfasst, die zusammen einen Umlenkkanal (22) für die Wälzkörper bilden,
- wobei der Umlenkkanal (22) zwei im Wesentlichen rohrförmige Enden (24, 26) als Wälzkörperöffnungen aufweist, die über einen Transferbereich (28) miteinander verbunden sind,
- wobei das erste Köperteil (18) in dem Transferbereich (28) eine radial innen liegende Begrenzung des Umlenkkanals (22) zur Verfügung stellt,
- wobei das zweite Körperteil (20) in dem Transferbereich (28) eine radial außen liegende Begrenzung sowie seitliche Begrenzungen des Umlenkkanals (22) zur Verfügung stellt,
- wobei die rohrförmigen Enden (24, 26) des Umlenkkanals jeweils durch sich ergänzende teilrohrförmige Abschnitte (30, 32, 34, 36) des ersten Körperteils (18) und des zweiten Körperteils (20) gebildet sind, und
- wobei eine die Mutter (14) umfassende Hülse (40) vorgesehen ist, die Umlenkeinrichtung (18, 20) in einer Öffnung (42) der Mutter (14) sitzt, **dadurch gekennzeichnet, dass** die Umlenkeinrichtung (18, 20) bei Abwesenheit der Hülse (40) in einem entspannten Zustand radial über die äußere Mantelfläche der Mutter (14) hinausragt und in Anwesenheit der Hülse (40) diese eine radial nach innen gerichtete Kraft auf die Umlenkeinrichtung (18, 20) ausübt.

2. Kugelgewindetrieb (10) nach Anspruch 1, **dadurch gekennzeichnet, dass** die teilrohrförmigen Abschnitte (30, 32, 34, 36) des ersten Körperteils (18) und des zweiten Körperteils (20) wenigstens an einem Ende des Umlenkkanals (22) halbrohrförmig sind.

3. Kugelgewindetrieb (10) nach Anspruch 1 oder 2, **dadurch gekennzeichnet, dass** beide Körperteile (18, 20) wenigstens an einem Ende des Umlenkkanals (22) dieselbe radiale Länge haben.

4. Kugelgewindetrieb (10) nach einem der vorhergehenden Ansprüche, **dadurch gekennzeichnet, dass** das zweite Körperteil (20) in dem Transferbereich (28) eine u-förmige Begrenzung (38) des Umlenkkanals (22) zur Verfügung stellt.

5. Kugelgewindetrieb (10) nach einem der vorhergehenden Ansprüche, **dadurch gekennzeichnet, dass** das erste Körperteil (18) ein Tiefzieh-, Stanz- oder Prägeteil ist.

6. Kugelgewindetrieb (10) nach einem der vorhergehenden Ansprüche, **dadurch gekennzeichnet, dass** das zweite Körperteil (20) ein Stanz- oder Prägeteil ist.

7. Kugelgewindetrieb (10) nach einem der vorhergehenden Ansprüche, **dadurch gekennzeichnet, dass** die radiale Kraft der Hülse (40) auf die Umlenkeinrichtung (18, 20) mindestens in einem Temperaturbereich zwischen -50 und +150 Grad Celsius das zweite Körperteil (20) auf das erste Körperteil (18) drückt.

8. Kugelgewindetrieb nach einem der vorhergehenden Ansprüche, **dadurch gekennzeichnet, dass** mehrere miteinander verbundene Umlenkeinrichtungen vorgesehen sind, wobei die jeweils ersten Körperteile (18) und/oder die jeweils zweiten Körperteile (20) miteinander verbunden sind.

## Claims

1. A ball screw (10) comprising a threaded spindle (12), a nut (14), a plurality of rolling bodies (16) and at least one deflection device (18, 20), wherein the threaded spindle (12) is displaceable relative to the nut (14) in the axial direction by rotation relative to the nut (14), and wherein the deflection device comprises a radially internal first body part (18) and a radially external second body part (20), which together form a deflection channel (22) for the rolling bodies,
- wherein the deflection channel (22) comprises two substantially tubular ends (24, 26) as rolling body openings which are connected to one another via a transfer region (28),
- wherein the first body part (18) in the transfer region (28) provides a radially internal delimitation of the deflection channel (22),
- wherein the second body part (20) in the transfer region (28) provides a radially external delimitation and lateral delimitations of the deflection channel (22),
- wherein the tubular ends (24, 26) of the deflection channel in each case are formed by complementary part-tubular portions (30, 32, 34, 36) of the first body part (18) and of the second body part (20), and
- wherein a sleeve (40) encompassing the nut (14) is provided, the deflection device (18, 20) being located in an opening (42) of the nut (14), **characterised in that** in a non-tensioned state when the sleeve (40) is absent the deflection device (18, 20) protrudes radially beyond the outer envelope surface of the nut (14) and when the sleeve (40) is present said sleeve exerts a radially inwardly oriented force on the deflection device (18, 20).

2. The ball screw (10) according to Claim 1, **characterised in that** the part-tubular portions (30, 32, 34, 36) of the first body part (18) and of the second body part (20) are half-tube-shaped at least at one end of the deflection channel (22).

3. The ball screw (10) according to Claim 1 or 2, **characterised in that** the two body parts (18, 20) have the same radial length at least at one end of the deflection channel (22).

4. The ball screw (10) according to one of the preceding claims, **characterised in that** the second body part (20) in the transfer region (28) provides a U-shaped delimitation (38) of the deflection channel (22).

5. The ball screw (10) according to one of the preceding claims, **characterised in that** the first body part (18) is a deep-drawn, punched or stamped part.

6. The ball screw (10) according to one of the preceding claims, **characterised in that** the second body part (20) is a punched or stamped part.

7. The ball screw (10) according to one of the preceding claims, **characterised in that** the radial force of the sleeve (40) on the deflection device (18, 20) presses the second body part (20) onto the first body part (18) at least in a temperature range of between - 50 and + 150 degrees Celsius.

8. The ball screw according to one of the preceding claims, **characterised in that** a plurality of deflection devices which are connected to one another are provided, wherein the respective first body parts (18) and/or the respective second body parts (20) are connected to one another.

## Revendications

1. Vis d'entraînement à billes (10) avec une tige filetée (12), un écrou (14), une pluralité d'éléments de roulement (16) et au moins un système de renvoi (18, 20), sachant que la tige filetée (12) peut être déplacée par rotation par rapport à l'écrou (14) dans la direction axiale par rapport à l'écrou (14) et sachant que le système de renvoi comprend une première partie de corps (18) située radialement à l'intérieur et une deuxième partie de corps (20) située radialement à l'extérieur, qui forment ensemble un conduit de renvoi (22) pour les éléments de roulement,
- sachant que le conduit de renvoi (22) comporte deux extrémités (24, 26) pour l'essentiel de forme tubulaire sous la forme d'ouvertures pour éléments de roulement, qui sont reliées l'une à l'autre par une zone de transfert (28),
- sachant que la première partie de corps (18) fournit dans la zone de transfert (28) une limitation du conduit de renvoi (22), située radialement à l'intérieur,
- sachant que la deuxième partie de corps (20) fournit dans la zone de transfert (28) une limitation située radialement à l'extérieur ainsi que des limitations latérales du conduit de renvoi (22),
- sachant que les extrémités de forme tubulaire (24, 26) du conduit de renvoi sont respectivement formées par des sections partiellement tubulaires se complétant (30, 32, 34, 36) de la première partie de corps (18) et de la deuxième partie de corps (20), et
- sachant qu'un manchon (40) entourant l'écrou (14) est prévu, le système de renvoi (18, 20) se situe dans une ouverture (42) de l'écrou (14), **caractérisée en ce que** le système de renvoi (18, 20) dans un état détendu en absence de manchon (40), dépasse radialement au-delà de la surface d'enveloppe extérieure de l'écrou (14) et celui-ci exerce une force radialement orientée vers l'intérieur sur le système de renvoi (18, 20) en présence du manchon (40).

2. Vis d'entraînement à billes (10) selon la revendication 1, **caractérisée en ce que** les sections (30, 32, 34, 36) de forme partiellement tubulaire de la première partie de corps (18) et de la deuxième partie de corps (20) sont semi-tubulaires au moins à une extrémité du conduit de renvoi (22).

3. Vis d'entraînement à billes (10) selon la revendication 1 ou 2, **caractérisée en ce que** les deux parties de corps (18, 20) possèdent la même longueur radiale au moins à une extrémité du conduit de renvoi (22).

4. Vis d'entraînement à billes (10) selon l'une quelconque des revendications précédentes, **caractérisée en ce que** la deuxième partie de corps (20) fournit dans la zone de transfert (28) une limitation en forme de U (38) du conduit de renvoi (22).

5. Vis d'entraînement à billes (10) selon l'une quelconque des revendications précédentes, **caractérisée en ce que** la première partie de corps (18) est une pièce emboutie, estampée ou matricée.

6. Vis d'entraînement à billes (10) selon l'une quelconque des revendications précédentes, **caractérisée en ce que** la deuxième partie de corps (20) est une pièce estampée ou matricée.

7. Vis d'entraînement à billes (10) selon l'une quelconque des revendications précédentes, **caractérisée en ce que** la force radiale du manchon (40) sur le système de renvoi (18, 20) comprime la deuxième partie de corps (20) sur la première partie de cops (18) au moins dans une gamme de températures se situant entre -50 et + 150 degrés Celsius.

8. Vis d'entraînement à billes selon l'une quelconque des revendications précédentes, **caractérisée en ce que** plusieurs systèmes de renvoi reliés entre eux sont prévus, sachant que respectivement les premières parties de corps (18) et/ou respectivement les deuxièmes parties de corps (20) sont reliées les unes aux autres.
